# EUROPEAN PATENT SPECIFICATION

(11) **EP 2 014 417 B1**
(45) Date of publication and mention of the grant of the patent: **09.04.2014**
(21) Application number: 08159481.4
(22) Date of filing: 02.07.2008
(51) Int. Cl.: B24C 11/00, B24B 37/04, B24D 11/00, B24D 18/00

(54) **Abrasive coating and method of manufacturing same**
Schleifbeschichtung und Verfahren zu ihrer Herstellung
Revêtement abrasif et son procédé de fabrication

(30) Priority: 10.07.2007 FI 20075533
(43) Date of publication of application: 14.01.2009
(73) Proprietor: OY KWH MIRKA AB, 66850 Jeppo (FI)
(72) Inventor: Höglund, Göran, 66900 Nykarleby (FI); Nordström, Caj, 66850 Jeppo (FI)
(74) Representative: Kolster Oy Ab

(56) References cited:
- WO-A-01/02772
- WO-A-01/04227
- FR-A- 2 860 744
- US-A- 5 672 097
- US-A- 5 681 217
- US-A1- 2004 097 175
- US-A1- 2005 182 606

## Description

### TECHNICAL FIELD

The present invention relates to a method of manufacturing a casting mould of the kind defined in the preamble of independent claim 1 for use in the manufacture of an abrasive product.

Such an abrasive product is utilized in fine grinding of demanding surfaces to be abraded. The abrasive product especially comprises an abrasive coating provided on a so-called flexible backing, but rigid backings are also feasible.

The present invention relates further to an individual casting mold according to claim 13.

### PRIOR ART

In fine grinding, fine grain sizes are used in the abrasive grain to achieve an optimally faultless surface. However, two major problems arise normally in abrasion with abrasive products coated with fine abrasive grains. Firstly, the abrasive-coated upper side of the product is filled up by material detached from the surface being processed. Secondly, irregularities and faults are generated with normal coating methods during the dispersion of the abrasive grains, so-called scattering faults. These problems, in turn, give rise to far too coarse scratches in the abrasive pattern of the surface being processed.

Furthermore, the abrasive product is easily absorbed in the work surface in wet abrasion. This is the result of part of the liquid being evaporated, whereby the rest of the liquid is mixed with the abrasion residues into a sticky glue-like dough.

To avoid the above problem, the abrasive product is covered with a slurry of fine sand and glue moulded into a structured precise pattern for achieving a better surface quality in this manner. The aim has been to provide this pattern with an openness that gives more space for the abrasion residues and is therefore not absorbed as easily. By making the structure in the pattern fragile and the abrasive grains small, a gradual renovation of abrasive grains has been also achieved, their surface finish being much finer than the composites of the moulded structure would imply by definition. These methods also enable the creation of passages in the coating surface and holes through the abrasive product or a combination thereof, which promote the self-purification and the liquid supply of the abrasive product, and the discharge of abrasion residues.

For example, linear formations have been created in an abrasive coating with abrasive, precisely shaped composites. However, it has become evident that, in a linear abrasion movement, these generate stripes in the abraded surface when the direction of the abrasive movement coincides with the lines of the abrasive coating.

Even if oscillating tools are utilized in the abrasion, the oscillating movement of the abrasive product, together with a freely spinning disk, particularly with the tool in an inclined position, may result in a reciprocal movement in the periphery of the disk, which coincides with the linear formations of the abrasive coating and consequently may cause stripes that are very difficult to polish off.

The development of the prior art and the level thereof today are described in patent publications, such as US 2 292 261, for example. This publication discloses a method of manufacturing an abrasive product by coating a flexible backing with a mass consisting of an adhesive and sand. The coated layer is pressed against a mould having a desired pattern for thus shaping the coating to achieve a linear pattern with abrasive quadrangular protrusions. Finally, the resultant coating is cured.

Publication US 5 014 468 discloses, in turn, a flexible abrasive product consisting of a flexible backing and a coating comprising a binder and sand. According to the publication, the surface of the coating is provided with three-dimensional formations constituting a discontinuous surface, normally a hexagonal pattern. This pattern is achieved most easily with a gravure roll. The drawback in this solution is that the height of the formations is not completely controlled, but is dependent on the film division in every formation part during unrolling of the gravure roll against the surface to be shaped.

US 5 152 917 describes an abrasive article having a non-random pattern of precisely shaped abrasive composites, usually pyramids that have three or four sides and whose breadths may vary, but which usually stand in linear formations. Publication US 5 304 223 further describes a method of preparing and using a product according to publication US 5 152 917.

Document US 5672097 discloses a method and a casting mould according to the preambles of claims 1 and 13.

The problem in manufacturing the abrasive grain pattern is to create the surface structure, the prototype or casting mould, against which the abrasive coating is to be moulded.

Because usually pyramid-like structures of a size of 25 to 200 my are involved, a very high precision is required in the work. Therefore, methods are often used where a positive male mould is made, with which the negative female mould is then embossed, against which the pattern of the coating is moulded. Usually, such patterns are created by cutting V-shaped grooves transversely over the upper surface in the positive mould, with which the final female mould is then manufactured. The V-shaped grooves provide pyramids having different appearances.

To be able to manufacture web-like materials in the form of rolls with conventional methods described in the above patent publications, for example, tools in quite large dimensions are required, usually a large cylinder or roller. This restricts practical and economically feasible manufacture.

### APPROACH TO PROBLEM

The problems of prior art solutions can be substantially avoided with the present invention. For this purpose, the object of the invention is to provide a method according to claim 1 and a casting mould according to claim 13. In said manufacture, a computer program is preferably relied upon for creating a digital model that can be used for controlling the device that provides the surface pattern of the casting mould.

The respective subsequent dependent claims disclose suitable further developments and variants of the invention that further improve the operation thereof.

The invention is based on the idea of abandoning the established principle of manufacturing abrasive products starting from a continuously running web with non-randomly flat patterns, from which the abrasive products are punched. Instead, according to the present invention, the abrasive products are manufactured one by one. Accordingly, the structured patterns of the abrasive-coated upper side of the individual abrasive products are moulded against a separate female casting mould. By further arranging said female casting mould as a disposable mould, very advanced patterns may be created owing to the small size of the abrasive product, without the costs becoming too burdensome. The individual female casting moulds can simply be provided with fastening means or pins, which makes them simple to fasten to a tool or a holder or to be shaped or embossed adjacent to each other on a plane or cylindrical tool part, which enables the shaping or embossing of a plurality at a time or a plurality in a unbroken sequence if a continuous material is used in the form of e.g. a film and if the backing of the abrasive product is a film, too.

Several significant advantages over the prior art are achieved with the method disclosed in the present invention, and the abrasive product manufactured thereby and the abrasive coating thereof. Consequently, an abrasive product can be made with a pattern wherein the individual abrasive formations are placed randomly. This randomness can be provided in different manners, since neither the engraving of the pattern or the size of the casting mould bring about such restraints as do normal cutting processing methods and continuous manufacture of roll-formed material on the size of the engraving surface.

The random distribution of the composite grains allows the risk of interference during a processing work with the present abrasive product to be avoided with a high certainty.

The inventive disposable moulds can be preferably manufactured from a polymer material that is grafted with a polymer with more pronounced release properties than the basic polymer of the casting mould has. Thus, in certain cases, the disposable mould can be used several times, particularly if UV-curing or another type of beam curing of the abrasive coating takes place directly in the tool wherein the surface structure thereof is shaped. The beam curing may take place both through the casting mould and the backing of the product, provided both are manufactured from a suitable material, which the type of radiation used is able to permeate.

Further advantages and details of the invention are described in more detail in the description below.

### SUMMARY OF THE DRAWING FIGURES

In the following, the invention will be described in more detail with reference to the drawing, wherein
Figure 1 shows a schematic view of an abrasive coating having a non-linear coordinate system for generating composite fields on the upper surface of an intended casting mould,
Figure 2 shows examples of alternative placements of pyramid-formed composite grains,
Figure 3 shows an enlargement of a composite field of Figure 1,
Figure 4 shows the upper surface of a casting mould - in this case a male mould - for the manufacture of an abrasive coating having randomly placed composite grains, seen from above,
Figure 5 shows a casting mould of Figure 4 in side view,
Figure 6 shows a digital model of a male mould comprising randomly placed pyramid-formed composite grains,
Figure 7 shows an electron microscope picture of an inventive male mould,
Figure 8 shows an electron microscope picture of a female mould,
Figure 9 shows an electron microscope picture of composite grains on the upper side of an abrasive product,
Figure 10 shows an alternative digital model of a male mould comprising randomly placed pyramid-formed composite grains of different shapes,
Figure 11 shows an electron microscope picture of composite grains randomly placed on the upper side of an abrasive product according to a mould manufactured according to a digital model of the type shown in Figure 10, and
Figure 12 shows an electron microscope picture of composite grains of Figure 11 in a further enlargement.

### PREFERRED EMBODIMENTS

Some preferred embodiments of the present abrasive product and the abrasive coating thereof, and the methods for manufacturing the same are described below with reference to the above figures. In this connection, an abrasive product comprises the structural details shown in the figures, each being denoted with a respective reference numeral. These reference numerals correspond to the reference numerals used below in the following description.

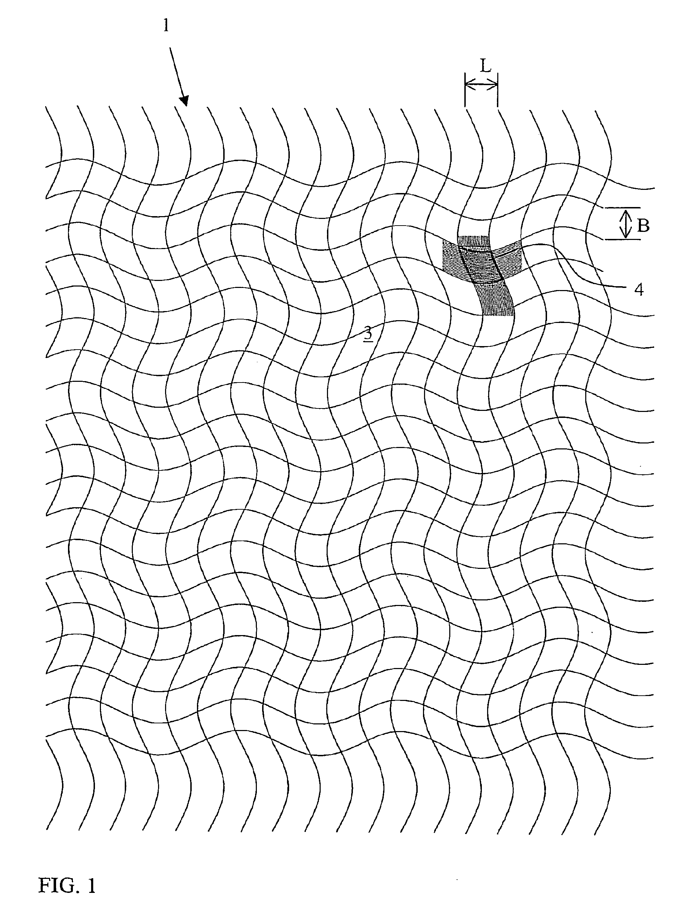

Thus, Figure 1 shows a schematic view of a particular embodiment of a casting mould 1 used for manufacturing the present abrasive product. In the figure, a highly enlarged upper side 2 of the casting mould is divided up into a coordinate system, in this case non-linear. Herein, the upper side comprises a box field 3, the sides thereof being parallel with the axles of the coordinate system. This box field is composed of individual composite fields 4, which are generated when the lines of the box field intersect. Such a box field comprises sides having a length L and a breadth B.

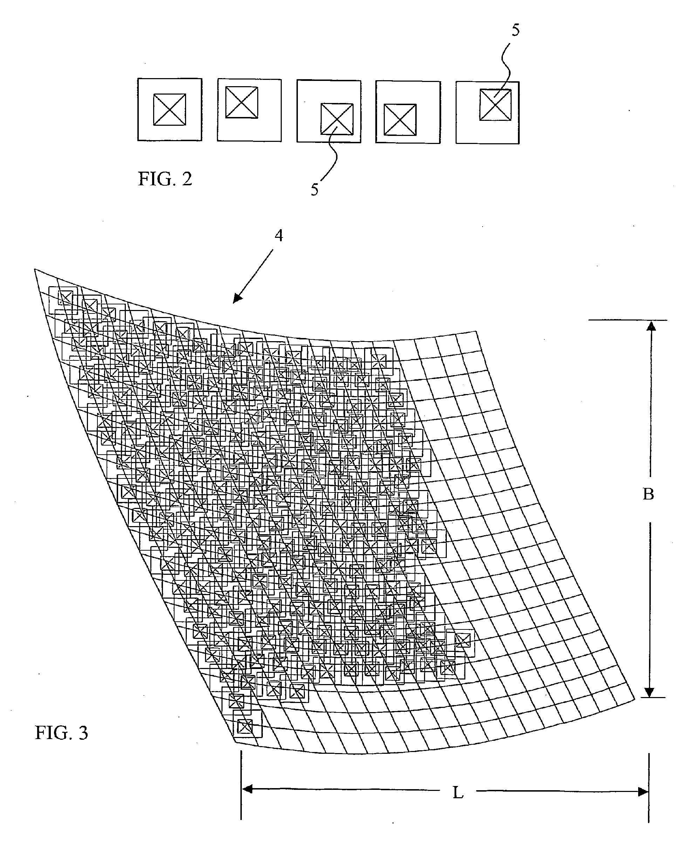

Said composite field 4 is shown in a further enlargement in Figure 3. In this case, the composite field comprises prototypes 5 for composite grains distributed substantially randomly onto the surface of the composite field. This distribution is achieved by mathematically distributing individual prototypes for the composite grains in different manners within delimiting surfaces according to Figure 2, for example. These models can then be placed in a random order onto the composite field in order to finally generate a casting mould enabling the manufacture of the present abrasive product with a random distribution of the composite grains on the upper side 6 thereof.

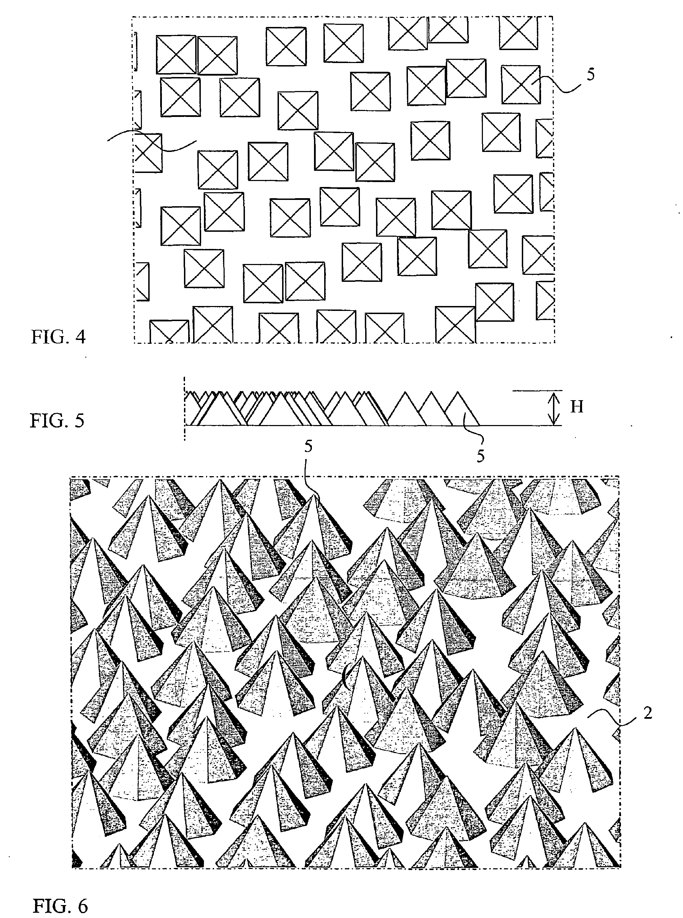

Figures 4 and 5 show a corresponding distribution of the composite grains of the abrasive coating in a horizontal projection from above and from the side, respectively.

Figure 6 further illustrates a schematic view showing the upper side 2 of a casting mould and prototypes 5 for the abrasive coating thereof in an axonometric implementation. The prototypes of the abrasive coating comprise a plurality of polyhedral models, which in this embodiment are substantially pyramid-shaped.

To obtain a desired arrangement of the abrasive coating on the upper side 6 of the abrasive product, a backing, known *per se,* is coated with a slurry, which preferably comprises glue 7 and sand or other abrasive grains 8. The slurry comprised by the backing is then shaped into polyhedrons or cones by compressing at least one above-mentioned casting mould 1 with a desired so-called negative pattern - a female mould 1b - against the slurry-coated upper side of the abrasive product. Accordingly, the abrasive coating assumes a predetermined structure defined in the casting mould and provides the above-mentioned conical or polyhedral grains, which can finally be cured for creating composite grains 9 of the abrasive coating. Consequently, the upper side of the abrasive product will finally have a three-dimensional pattern of individually generated composite grains of sand and glue, wherein the character of the pattern comprises similarly or differently shaped composite grains randomly placed on the upper side of the individual abrasive product. In this way, an abrasive product having a product-specific pattern for the distribution of the composite grains over the upper side of the abrasive product is created.

The composite grain 9 formations may also be created by first filling the cavities of the female mould 1 b with slurry or with sand or corresponding abrasive grains 8. In this case, the cavities of the casting mould are arranged to fit at least one abrasive grain and glue 7 separately in order to then compress the backing and the female mould with contents against each other. The adhesion may be further improved with an intermediate glue layer. If this glue layer spread onto the backing wet-on-wet is brought together with the composites made from the slurry in the mould, a substantial improvement in the adherence of the composite grains to the backing is achieved.

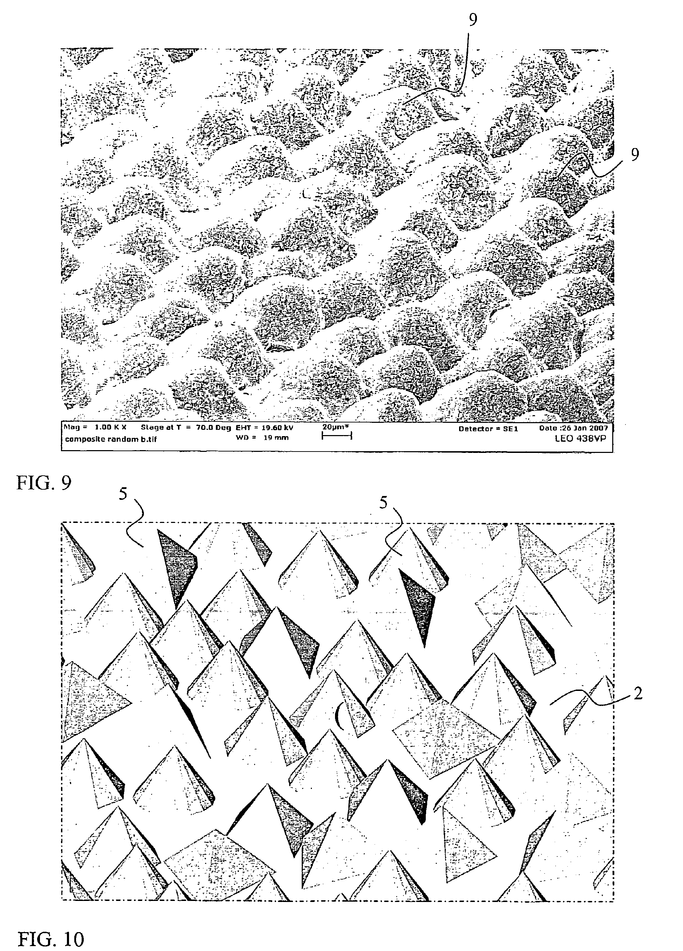

The composite grains 9 have geometric shapes, which, according to the present embodiments, are preferably composed of conical or polyhedral bodies. According to Figures 6 or 10, such a polyhedral body is an equilateral pyramid or a truncated pyramid, for example, with a bottom surface oriented against the backing and three or more side surfaces. It is even feasible that the composite grain assumes the shape of an elongated prism, for example, that has a side corresponding to the above bottom surface with longitudinal edge lines, which are substantially longer than the transverse edge lines of the prism or the height thereof. It is common to the composite grains that they have a cross-section that is substantially tapering in a direction diverging from said backing, in order to contribute to a better release. It is also preferable for the composite grains to have a height H that is substantially equal relative to the upper side of the abrasive product, according to Figure 5.

It is also feasible both to process the upper side 6 of the entire abrasive product as a single whole and to divide it into adjacently arranged composite fields 4. In such an abrasive product, each composite field will have a three-dimensional pattern of a number of separately generated, randomly placed composite grains 9. The adjacent composite fields may have a similar three-dimensional pattern in accordance with Figures 1 and 3, but the shapes of the patterns may as well differ from each other.

To return to the schematic view shown in Figure 1, the upper side 2 of the casting mould 1 is preferably provided with a pattern comprising a transverse line division, which thus constitutes a grid. Each individual box delimited in such a manner thus constitutes a composite field 4 of its own.

The grid comprises a line division constituting a regular pattern, for example, whereby the respective dividing lines are characterized by being substantially straight and evenly distributed over the upper side 2 of the casting mould 1. For example, it is feasible to consider solutions wherein the grid is composed of areas between substantially 90° transversely straight and parallel lines with an even allocation. Alternatively, the grid may comprise triangular areas created by evenly distributed straight and parallel lines with a mutual angle of 60° in three axial directions.

Furthermore, the grid may be composed of dividing lines deviating from straight. They may preferably be curved and sinusoidal in accordance with Figure 1 or they may be zigzag-shaped.

The dividing lines of the grid may even vary repeatedly in a desired ratio selected between 1:1.2 and 1:2. Alternatively, the variation of the dividing lines may be random within a desired range from 1:1.2 to 1:2 in such a manner that the variation range is divided into five intervals, for example, and one of these is selected by means of a random number generator gradually for each line. Furthermore, it is feasible that the parallelism of the dividing lines deviates repeatedly or randomly within the above-mentioned intervals.

It is not either necessary to arrange the abrasive coating to comprise uniform composite grains 9, but the three-dimensional pattern of the coating may at least partly comprise composite grains of different shapes.

If the abrasive coating comprises composite grains 9 having the shape of elongated polyhedrons, for example prisms, these may be arranged in pairs on the backing, whereby they are preferably arranged alternately parallel-oriented and at an angle relative to each other.

Even if an abrasive product often has a plane structure, nothing restricts the present abrasive product to such an implementation. The upper side 6 to be coated may as well deviate from plane and be composed of the upper side of an abrasive tool, for example. The upper side of the abrasive product may also be manufactured curved in order to fit the surface to be abraded.

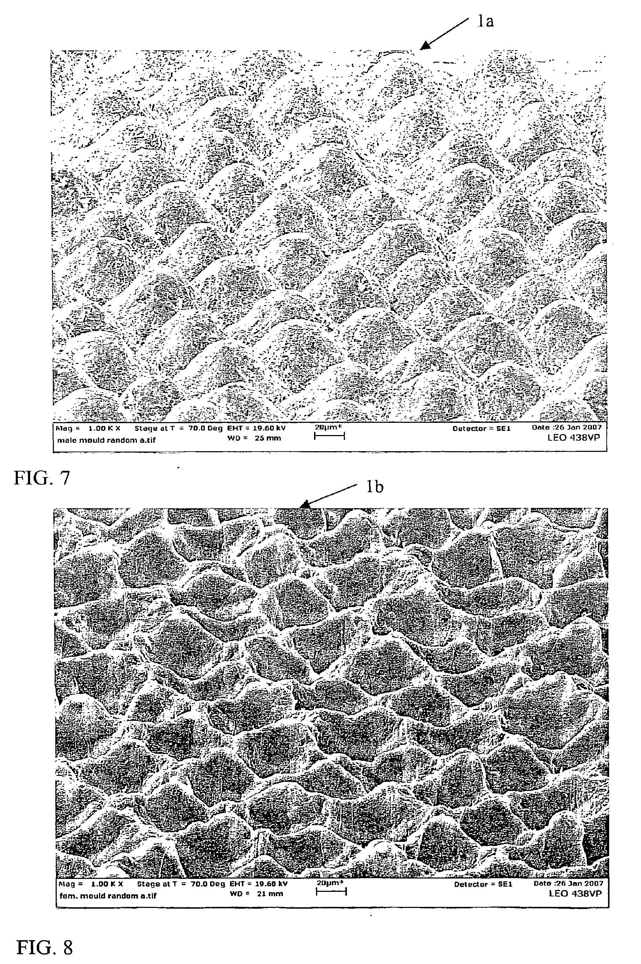

To be able to obtain an abrasive product that optimally avoids interference during the abrasive work, it is possible to process each abrasive product separately. Accordingly, the structured pattern of the abrasive-coated upper side 6 of each individual abrasive product is shaped against a separate negative casting mould - a female mould 1b - according to Figure 8. This casting mould has a randomly designed pattern.

This casting mould 1, which may preferably be manufactured as a disposable mould, is manufactured by moulding it against an original model - a male mould 1a - according to Figure 7. The following manner, for example, may be adopted for providing the surface of the casting mould with a random distribution of the mould details of the composite grain 9.

At the first stage of the manufacturing method, an upper side 2 of the intended casting mould 1 and an available processing area comprised thereby and preferably comprising one or more of said composite fields 4 is identified with special members, whereafter it is described digitally. The upper side 2 may be plane, externally or internally cylindrical, externally or internally spherical, or have the shape of a specially desired tool. At the next stage of the method, a planning of the moulding pattern of the processing area takes place in such a manner that the intended details for the future composite grains 9 are selected randomly from a finite number of differently shaped available ready-made prototypes, of which Figure 2 shows examples. It is naturally feasible that such prototypes of the composite grains are substantially uniform or that they are produced freely on the basis of certain specified limit values. The details of the composite grains are then placed onto the digital model of the processing area by placing the selected prototypes 5 at randomly selected locations on the processing area. At the same time, the prototypes may be given a random orientation on the processing area. Finally, the upper side of the casting mould is processed for transferring this digital model to the final casting mould 1.

For handling the above-described digital distribution of the prototypes 5 of the composite grains 9, the work is preferably carried out by an automatic data processing unit. In this work, a computer program product developed for this purpose and found in the above-mentioned automatic data processing unit or another memory unit readable by said automatic data processing unit is preferably utilized. The memory unit may be composed of an electrical, magnetic, optic, infrared or semiconductor system, arrangement or transmission device or a corresponding arrangement, for example.

The automatic data processing unit compiles the digital model for providing the coating of the casting mould by utilizing one or more algorithms. This digital model is then preferably used for controlling the tool or the machine that directly processes the casting mould - the female mould 1b - against which the final coating of the abrasive product is moulded. Said tool or machine may naturally also be used for manufacturing a male mould 1a against which an optional female mould is moulded.

The intended processing area of the casting mould 1 usually comprises a predetermined part of the upper surface of the casting mould. In this case, the processing area may comprise the entire upper surface, but the surface may also be divided into a pattern comprising a transverse line division that thus provides a grid in the upper surface where each individual box delimited in this manner provides a special processing area in accordance with Figure 1. As was mentioned previously, the processing area may be divided into a grid by providing a regular pattern by means of a line division, wherein the dividing lines are substantially straight and evenly distributed or differ from straight. In the same way, the dividing lines may have a parallel or an unparallel division.

As in the generation of the entire processing area of the casting mould 1, the prototypes 5 of the composite grains 9, according to which the details of the composite grains are generated, are selected randomly within each individual box. Likewise, the generation of the composite grains takes place both in the digital model and in the respective processing area in a random order, in a random orientation and at randomly selected positions.

The placement of the prototype 5 of the composite grain 9 in the digital model and then the composite grain itself on the upper side 6 of the abrasive product may vary in a plurality of different manners. The prototype that indicates the geometric shape of the details of the composite grain may vary freely and the prototypes may also be rotated alternately in a longitudinal and a transverse placement relative to each other. If the prototypes of the composite grains comprise elongated polyhedrons, for example, they may preferably be placed in pairs in such a manner that they assume alternately a transverse and a longitudinal orientation on the processing area. The distribution of the prototypes of the composite grains may be entirely random over the processing area of the entire casting mould 1, but it is also feasible to determine certain rules, for instance that a given number of composite grains and a corresponding prototype are determined for each individual unit of the processing area that are placed randomly over the processing area.

The above grid can be further arranged to be particularly finely divided, whereby each individual thus defined composite field 4 defines the division desired between the individual composite grains 9. In such an embodiment, when the prototypes 5 of the composite grains are given a number of alternative locations in relation to the crossing points of the dividing lines, a random placement is created by randomly selecting one of the alternatives in each individual box on the processing area.

Such an implementation is exemplified in Figures 4 to 6. By varying the placement of the polyhedrons on the surface, a number of different feasible building components are obtained, in other words, prototypes of the composite grains 9. These building components may then be placed over the surface of the processing area in such a number that it is substantially filled thereby. When performing this placement work automatically, by means of a random number generator or another corresponding calculation algorithm, it is possible each time to obtain different placements of the composite grains of the abrasive coating.

According to the above, an automatic data processing unit is used for generating a digital model of the future coating of the casting mould 1. Hereafter, an arrangement for manufacturing a casting mould utilizes this digital model for processing the casting mould used in the manufacture of a structured abrasive coating according to the above. The arrangement preferably comprises members arranged to identify the processing area of a casting mould. Furthermore, the arrangement comprises at least one tool for processing the casting mould against which the coating or the casting mould is moulded. The tool preferably comprises a device for enabling a laser ablation or another form of so-called epitaxial growth for processing the upper surface of the casting mould.

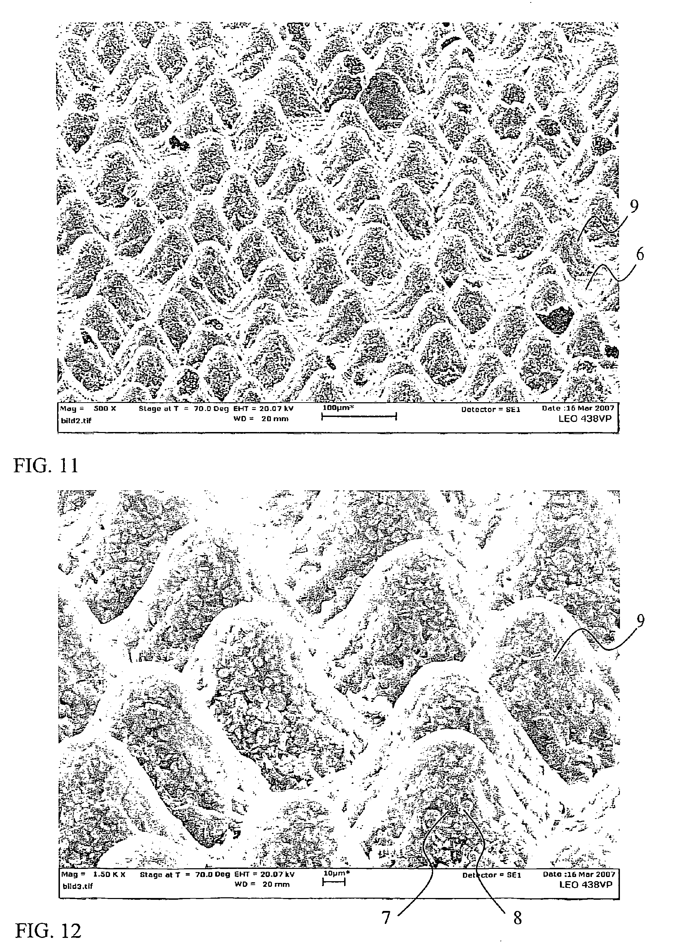

The utilization of a laser for arranging the details of the composite grains 9 in the casting mould 1 enables simple creation of desired non-linear and non-interfering patterns. According to the above, patterns can be produced wherein the arrangement of the formations is entirely or partly random. Figure 11 shows an electron microscopic picture of an abrasive product that is the result of such an arrangement.

In laser ablation, each composite grain 9 is shaped in the casting mould separately and can even be given an individual formulation. The formulation varies depending on how the laser beam is manoeuvred during the ablation. The ablation may be carried out in one direction only according to a given pattern, as the lines in a cathode ray-based TV screen. The ablation may also be carried out by continuously alternating the working direction, so-called random scanning. The choice of working method affects the appearance of the details of the composite grains and the variation thereof over the upper surface 2 of the casting mould 1. Experiments conducted have shown that the randomly selected alternating working direction mostly gives the best result.

In processing the casting mould 1, other working methods, known *per se,* may also be utilized, such as electrochemical engraving or so-called "Diamond turning".

The scope of the invention is defined by the appended claims.

## Claims

1. A method of manufacturing an individual casting mould (1) for use in the manufacture of a structured abrasive coating of an individual abrasive product,
which abrasive coating is to be arranged on an upper side comprised by the abrasive product by moulding abrasive grains (8) and glue (7) on a backing to form composite grains (9), thereby
identifying at least one processing area available on an upper side (2) comprised by the casting mould (1), which is used for shaping an individual abrasive product having the shape of a specially desired tool,
providing the processing area with three-dimensional product-specific moulding patterns made of prototypes (5) for the individual composite grains (9), whereby
the prototypes (5) are provided on the processing area at randomly selected locations,
**characterized by** the steps of
dividing the upper side (2) of the individual casting mould (1) set to produce individual abrasive products into a pattern by
forming a grid of a transverse line division that thus constitutes a box field (3),
each individual box delimited in this manner forming a processing area constituting a composite field (4), hereafter
the prototypes (5) for composite grains are selected randomly from a finite number of differently shaped available ready-made prototypes and are thereafter distributed onto the surface of the composite field.

2. A method as claimed in claim 1, **characterized by** providing the prototypes (5) for composite grains within predetermined delimiting surfaces in a random shape.

3. A method as claimed in claim 1 or 2, **characterized by** providing the prototypes (5) for composite grains within the predetermined delimiting surfaces in a random orientation.

4. A method as claimed in claim 1, 2 or 3, **characterized by** the prototypes (5) for composite grains comprising details provided to correspond to prototypes selected randomly from differently shaped available prototypes (5).

5. A method as claimed in any one of claims 1 to 4, **characterized by** manufacturing a male mould (1 a).

6. A method as claimed in any one of claims 1 to 5, **characterized by** manufacturing a female mould (1 b).

7. A method as claimed in any one of claims 1 to 6, **characterized by** the processing area comprising a predetermined part of the upper side (2) of the individual casting mould (1) set to produce a individual abrasive product.

8. A method as claimed in any one of claims 1 to 6, **characterized by** the processing area comprising the entire upper side (2) of the individual casting mould (1) set to produce individual abrasive product.

9. A method as claimed in any one of claims 1 to 8, **characterized by** providing the line division as a regular pattern.

10. A method as claimed in any one of claims 1 to 9, **characterized by** providing the line division with dividing lines that are substantially straight and evenly distributed.

11. A method as claimed in any one of claims 1 to 9, **characterized by** providing the line division with dividing lines that deviate from straight.

12. A method as claimed in any one of claims 1 to 11, **characterized by** arranging the grid finely divided in such a manner that each individual box defines a division desired between the individual composite grains (9), whereby, by giving the composite grains a number of alternative locations in relation to the crossing points of the dividing lines, a random placement is created by randomly selecting one of the alternatives for each individual part of the pattern.

13. An individual casting mould (1) for use in the manufacture of a structured abrasive coating of an individual abrasive product having the shape of a specially desired tool,
whereby an abrasive coating is to be arranged on an upper side of the abrasive product by moulding abrasive grains (8) and glue (7) on a backing to form composite grains (9),
the casting mould comprising at least one processing area available on an upper side (2) thereof, which is intended for shaping said individual abrasive product,
the processing area being provided with three-dimensional product-specific moulding patterns made of prototypes (5) for the individual composite grains (9), whereby
the prototypes are provided on the processing area at randomly selected locations,
**characterized by** that
the upper side (2) of the individual casting mould (1) set to separately produce each individual abrasive product is divided into a pattern,
this pattern is formed by a grid of a transverse line division thus forming a box field (3),
each individual box of said box field is delimited by the grid forming a processing area constituting a composite field (4),
the composite fields comprising prototypes (5) for composite grains distributed onto the surface thereof.

## Patentansprüche

1. Verfahren zur Herstellung einer individuellen Gießform (1) für den Einsatz in der Herstellung einer strukturierten Schleifbeschichtung eines individuellen Schleifprodukts,
welche Schleifbeschichtung auf einer am Schleifprodukt vorhandenen oberen Seite anzuordnen ist, indem Schleifkörner (8) und Bindung (7) auf eine Unterlage zur Ausbildung von Verbundkörnern (9) gegossen werden, wobei
zumindest ein Bearbeitungsbereich auf einer an der Gießform (1) vorhandenen oberen Seite (2) identifiziert wird, die für das Formen eines individuellen Schleifprodukts mit einer Form eines besonders gewünschten Werkzeuges eingesetzt wird,
wobei der Bearbeitungsbereich mit dreidimensionalen produktspezifischen Formmodellen versehen wird, die aus Prototypen (5) für die individuellen Verbundkörner (9) hergestellt sind, wobei
die Prototypen (5) auf dem Bearbeitungsbereich an zufällig ausgewählten Stellen angeordnet werden,
**gekennzeichnet durch** die Schritte, in denen
die obere Seite (2) der individuellen Gießform (1), die vorgesehen ist, individuelle Schleifprodukte herzustellen, in ein Modell eingeteilt wird, indem
ein Gitter von einer Querlinienverteilung ausgebildet wird, das somit ein Kästchenfeld (3) bildet,
jedes individuelle Kästchen, das auf diese Weise begrenzt ist, einen Bearbeitungsbereich ausbildet, der ein Verbundfeld (4) bildet, woraufhin
die Prototypen (5) für Verbundkörner aus einer begrenzten Anzahl von unterschiedlich geformten vorhandenen vorgefertigten Prototypen zufällig ausgewählt werden und anschließend auf die Oberfläche des Verbundfeldes verteilt werden.

2. Verfahren nach Patentanspruch 1, **dadurch gekennzeichnet, dass** die Prototypen (5) für Verbundkörner innerhalb von vorbestimmten begrenzenden Oberflächen in einer zufälligen Form angeordnet sind.

3. Verfahren nach Patentanspruch 1 oder 2, **dadurch gekennzeichnet, dass** die Prototypen (5) für Verbundkörner innerhalb von vorbestimmten begrenzenden Oberflächen in einer zufälligen Orientierung angeordnet sind.

4. Verfahren nach Patentanspruch 1, 2 oder 3, dadurch **ge- kennzeichnet**, dass die Prototypen (5) für Verbundkörner Einzelheiten aufweisen, die vorgesehen sind, Prototypen zu entsprechen, die aus unterschiedlich geformten vorhandenen Prototypen (5) zufällig ausgewählt sind.

5. Verfahren nach einem der Ansprüche 1 bis 4, dadurch **ge- kennzeichnet**, dass eine Positivform (1 a) hergestellt wird.

6. Verfahren nach einem der Ansprüche 1 bis 5, dadurch **ge- kennzeichnet**, dass eine Negativform (1 b) hergestellt wird.

7. Verfahren nach einem der Patentansprüche 1 bis 6, **dadurch gekennzeichnet, dass** der Bearbeitungsbereich einen vorbestimmten Teil der oberen Seite (2) der individuellen Gießform (1) aufweist, die vorgesehen ist, ein individuelles Schleifprodukt herzustellen.

8. Verfahren nach einem der Patentansprüche 1 bis 6, **dadurch gekennzeichnet, dass** der Bearbeitungsbereich den gesamten oberen Seite (2) der individuellen Gießform (1) aufweist, die vorgesehen ist, ein individuelles Schleifprodukt herzustellen.

9. Verfahren nach einem der Patentansprüche 1 bis 8, **dadurch gekennzeichnet, dass** die Linienverteilung als regelmäßiges Modell angeordnet ist.

10. Verfahren nach einem der Patentansprüche 1 bis 9, **dadurch gekennzeichnet, dass** die Linienverteilung mit Teilungslinien versehen wird, die wesentlich gerade und gleichmäßig verteilt sind.

11. Verfahren nach einem der Patentansprüche 1 bis 9, **dadurch gekennzeichnet, dass** die Linienverteilung mit Teilungslinien versehen wird, die von Geraden abweichen.

12. Verfahren nach einem der Patentansprüche 1 bis 11, **dadurch gekennzeichnet, dass** das Gitter feinverteilt angeordnet wird, so dass jedes individuelle Kästchen eine gewünschte Verteilung zwischen den individuellen Verbundkörnern (9) definiert, wobei, indem die Verbundkörner mit einer Anzahl von alternativen Stellen in Bezug auf die Kreuzungspunkte der Teilungslinien versehen werden, eine zufällige Anordnung bereitgestellt wird, indem eine der Alternativen für jeden individuellen Teil des Modells zufällig ausgewählt wird.

13. Individuelle Gießform (1) für den Einsatz in der Herstellung einer strukturierten Schleifbeschichtung eines individuellen Schleifprodukts mit der Form eines besonders gewünschten Werkzeuges,
wobei eine Schleifbeschichtung auf einer oberen Seite des Schleifprodukts anzuordnen ist, indem Schleifkörner (8) und Bindung (7) auf eine Unterlage zur Ausbildung von Verbundkörnern (9) gegossen werden,
welche Gießform zumindest einen auf ihrer oberen Seite (2) vorhandenen Bearbeitungsbereich aufweist, die für das Formen des besagten individuellen Schleifprodukts vorgesehen ist,
wobei der Bearbeitungsbereich mit dreidimensionalen produktspezifischen Formmodellen versehen wird, die aus Prototypen (5) für die individuellen Verbundkörner (9) hergestellt sind, wobei
die Prototypen (5) auf dem Bearbeitungsbereich an zufällig ausgewählten Stellen angeordnet werden,
**dadurchgekennzeichnet,** dass
die obere Seite (2) der individuellen Gießform (1), die vorgesehen ist, jedes individuelle Schleifprodukt separat herzustellen, in ein Modell eingeteilt wird,
dieses Modell aus einem Gitter von einer Querlinienverteilung ausgebildet wird, wodurch sich ein Kästchenfeld (3) bildet,
jedes individuelle Kästchen des besagten Kästchenfeldes durch das Gitter begrenzt wird, das einen Bearbeitungsbereich ausbildet, der ein Verbundfeld (4) bildet,
die Verbundfelder Prototypen (5) für Verbundkörner aufweisen, die auf ihre Oberfläche verteilt sind.

## Revendications

1. Procédé pour fabriquer un moule individuel (1) destiné à être utilisé pour la fabrication d'un revêtement abrasif structuré d'un produit abrasif individuel,
lequel revêtement abrasif doit être agencé sur un côté supérieur composé par le produit abrasif en moulant des grains abrasifs (8) et de la colle (7) sur un support pour former des grains composites (9),
identifier ainsi au moins une zone de traitement disponible sur un côté supérieur (2) composé par le moule (1), qui est utilisé pour former un produit abrasif individuel ayant la forme d'un outil spécialement souhaité,
attribuer à la zone de traitement des modèles de moulage spécifiques au produit tridimensionnel réalisés avec des prototypes (5) pour les grains composites individuels (9), moyennant quoi :
les prototypes (5) sont disposés sur la zone de traitement dans des emplacements sélectionnés de manière aléatoire,
**caractérisé par** les étapes consistant à,
diviser le côté supérieur (2) du moule individuel (1) déterminé pour produire des produits abrasifs individuels en un modèle en :
formant une grille d'une division de lignes transversales qui constitue ainsi un champ de boîte (3),
chaque boîte individuelle délimitée de cette manière formant une zone de traitement constituant un champ composite (4), ensuite,
les prototypes (5) pour les grains composites sont sélectionnés de manière aléatoire dans un nombre défini de prototype prêts à l'emploi de formes différentes disponibles et sont ensuite répartis sur la surface du champ composite.

2. Procédé selon la revendication 1, **caractérisé par** l'étape consistant à disposer les prototypes (5) pour des grains composites à l'intérieur de surfaces de délimitation prédéterminées selon une forme aléatoire.

3. Procédé selon la revendication 1 ou 2, **caractérisé par** l'étape consistant à disposer les prototypes (5) pour des grains composites à l'intérieur des surfaces de délimitation prédéterminées avec une orientation aléatoire.

4. Procédé selon la revendication 1, 2 ou 3, **caractérisé en ce que** les prototypes (5) pour grains composites comprennent des détails prévus pour correspondre aux prototypes sélectionnés de manière aléatoire à partir de prototypes de formes différentes (5) disponibles.

5. Procédé selon l'une quelconque des revendications 1 à 4, **caractérisé par** l'étape consistant à fabriquer un moule mâle (1a).

6. Procédé selon l'une quelconque des revendications 1 à 5, **caractérisé par** l'étape consistant à fabriquer un moule femelle (1b).

7. Procédé selon l'une quelconque des revendications 1 à 6, **caractérisé par** la zone de traitement qui comprend une partie prédéterminée du côté supérieur (2) du moule individuel (1) déterminé pour produire un produit abrasif individuel.

8. Procédé selon l'une quelconque des revendications 1 à 6, **caractérisé par** la zone de traitement qui comprend tout le côté supérieur (2) du moule individuel (1) déterminé pour produire un produit abrasif individuel.

9. Procédé selon l'une quelconque des revendications 1 à 8, **caractérisé par** l'étape consistant à prévoir la division de lignes sous la forme d'un moule régulier.

10. Procédé selon l'une quelconque des revendications 1 à 9, **caractérisé par** l'étape consistant à prévoir la division de lignes avec des lignes de division qui sont sensiblement droites et régulièrement réparties.

11. Procédé selon l'une quelconque des revendications 1 à 9, **caractérisé par** l'étape consistant à prévoir la division de ligne avec des lignes de division qui dévient d'une ligne droite.

12. Procédé selon l'une quelconque des revendications 1 à 11, **caractérisé par** l'étape consistant à agencer la grille finement divisée de sorte que chaque boîte individuelle définit une division souhaitée entre les grains composites individuels (9), moyennant quoi, en donnant aux grains composites, un nombre d'emplacement alternatifs en rapport avec les points de croisement des lignes de division, une mise en place aléatoire est créée en sélectionnant de manière aléatoire l'une des variantes pour chaque partie individuelle du modèle.

13. Moule individuel (1) destiné à être utilisé pour la fabrication d'un revêtement abrasif structuré d'un produit abrasif individuel ayant la forme d'un outil spécialement souhaité,
moyennant quoi un revêtement abrasif doit être agencé sur un côté supérieur du produit abrasif en moulant des grains abrasifs (8) et de la colle (7) sur un support pour former des grains composites (9),
le moule comprenant au moins une zone de traitement disponible sur son côté supérieur (2), qui est prévue pour former ledit produit abrasif individuel,
des modèles de moulage spécifiques au produit tridimensionnel réalisés avec des prototypes (5) pour les grains composites individuels (9) étant attribués à la zone de traitement, moyennant quoi :
les prototypes sont disposés sur la zone de traitement à des emplacements sélectionnés de manière aléatoire,
**caractérisé en ce que** :
le côté supérieur (2) du moule individuel (1) déterminé pour produire séparément chaque produit abrasif individuel est divisé en un modèle,
ce modèle est formé par une grille d'une division de lignes transversales, formant ainsi un champ de boîte (3),
chaque boîte individuelle dudit champ de boîte est délimitée par la grille formant une zone de traitement constituant un champ composite (4),
les champs composites comprenant des prototypes (5) pour des grains composites répartis sur leur surface.
